# EUROPEAN PATENT APPLICATION

(11) **EP 1 359 042 A1**
(43) Date of publication of application: **05.11.2003**
(21) Application number: 03009381.9
(22) Date of filing: 25.04.2003
(51) Int. Cl.: B60K 15/035

(54) **Method of venting fuel vapor from a tank and system therefor**

(30) Priority: 02.05.2002 US 137233
(71) Applicant: EATON CORPORATION, Cleveland, Ohio 44114-2584 (US)
(72) Inventor: Benjey, Robert, P., Dexter, Michigan 48130-9311 (US); Allman, Craig, H., Ypsilanti, Michigan 48197 (US); Jahnke, Russell, C., Ann Arbor, Michigan 48103 (US)
(74) Representative: Patentanwälte Rüger, Barthelt & Abel

(57) **Abstract**

In a fuel tank (12) having an electric fuel pump (38) therein, the fuel pump (38) is connected to discharge into a venturi (48) with a throat pressure tap line (52) connected to the bottom of a vapor vent valve (16) fed by spider tubes (56) to the tank vapor dome areas. Venturi throat suction pumps liquid accumulated in the vent valve (16) for discharge through the venturi (48) into the tank (12). A one way valve (54) prevents back flow in the throat pressure tap line (52) to the vent valve (16). Float operated valves (58) are provided on the ends of the spider tubes (56) to restrict fluid flow to the vapor vent valve (16).

## Description

### BACKGROUND OF THE INVENTION

The present invention relates to venting fuel vapor from a tank to a storage device and particularly for controlling the emission of fuel vapor from a motor vehicle fuel tank during periods of engine operation, shutdown and during refueling.

The invention particularly relates to current production passenger car and light truck vehicles which employ fuel injected engines with the injectors being electrically controlled and supplied fuel at a positive gauge pressure from an electric pump located in the fuel tank.

In motor vehicle fuel tank vapor vent control systems a float operated vent valve is disposed in the tank and located within the vapor dome above the liquid level. The vent valve controls venting of the fuel vapor from the tank during refueling such that the vent outlet to the storage device is closed upon the fuel rising to a predetermined fill level. Also, it is necessary to prevent liquid fuel from entering the vent line to the storage device in the event of sloshing of liquid fuel in the tank during vehicle operation and to provide protection for closing the vent in the event of vehicle rollover to prevent escape of liquid fuel.

Where a float operated fuel vapor vent valve is employed in the fuel tank it is usually located at the undersurface of the top wall of the tank; and, outrigger vent tubes are connected to the vent valve and the tubes extend to the extremities of the tank so that a vent is always located in the vapor dome to insure venting when the tank is tilted upon the vehicle encountering grades either during operation or when parked.

In operation, it has been experienced that sloshing of the liquid fuel in the tank has caused liquid fuel to enter and be trapped in the vent valve and vapor vent lines and thereby prevent proper venting of vapor from the tank.

It has therefore been desired to provide a way or means of draining liquid fuel from the fuel vapor vent valve and venting system in order to insure that fuel vapor can be vented to the storage device remotely connected to the tank for storing vapors.

### BRIEF SUMMARY OF THE INVENTION

The present invention provides a unique and novel system and method for controlling the venting of fuel vapor from a tank with an electric fuel pump in the fuel tank for providing fuel at a positive pressure to the engine fuel injector system. The outlet of the fuel pump is connected to discharge fuel not only through a line to the injectors externally of the tank, but also to the inlet of a venturi disposed in the tank. A dynamic pressure tap at the throat of the venturi is connected via a conduit to the outlet of a one way drain valve provided in the bottom of a float operated vent valve for controlling draining of liquid fuel from the venting system. The outlet of the venturi discharges to the liquid fuel in the tank; and, the reduced pressure in the venturi throat effects aspiration of liquid fuel trapped in the drain valve. A one-way valve is provided in the conduit from the venturi throat to the valving chamber of the vent valve to prevent liquid fuel from entering the drain valve from the venturi throat tap in the event the venturi discharge becomes blocked and from the hydrostatic pressure of the fuel when the engine is shut down.

### BRIEF DESCRIPTION OF THE DRAWINGS

FIG. 1 is a pictorial schematic of the system of the present invention;

FIG. 2 is a cross-section of the vapor vent valve of the system of FIG. 1;

FIG. 3 is an enlarged cross-section of a portion of FIG. 2 showing the drain valve pilot in the open position;

FIG. 4 is a view similar to FIG. 2 of another embodiment of the vent valve;

FIG. 5 is a section view taken along section indicating lines 5-5 of FIG. 4;

FIG. 6 is a cross-section of an alternate embodiment of the valve of FIG. 4;

FIG. 7 is a top view of a float operated restrictor valve for the system of FIG. 1; and,

FIG. 8 is a front elevation view with portions broken away of the restrictor valve of FIG. 7.

### DETAILED DESCRIPTION OF THE INVENTION

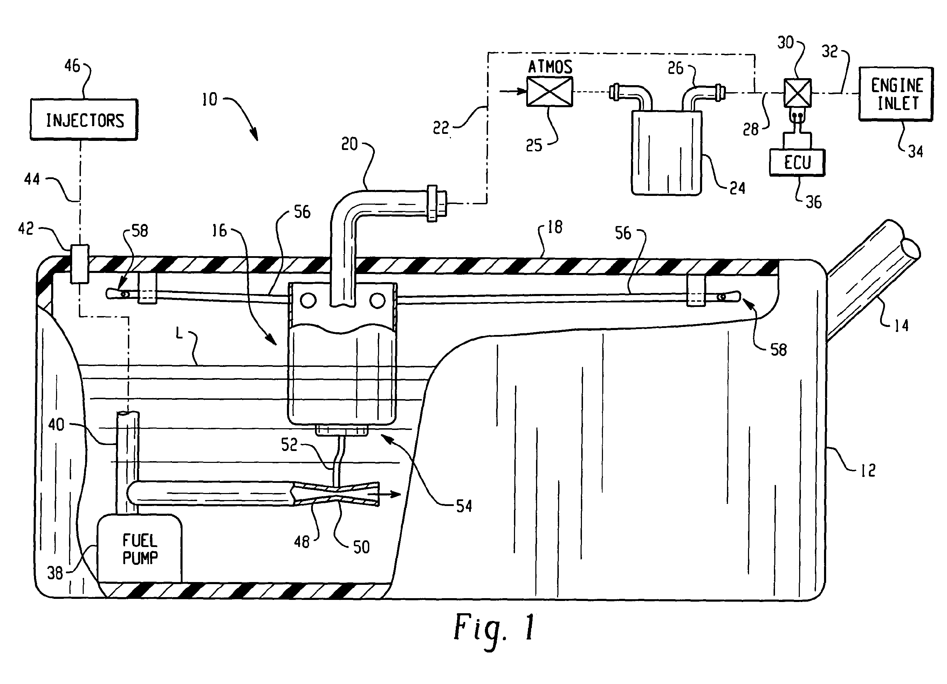

Referring to FIG. 1, the system of the present invention is indicated generally at 10 and includes a fuel tank 12 having a filler tube 14 attached thereto for refueling from a nozzle (not shown) and with a fuel vapor vent valve indicated generally at 16 disposed within the tank and adjacent the undersurface of the upper wall 18 of the tank 12. The vent valve 16 has an outlet or connector tube 20 extending through the upper wall 18 of the tank 12 and outlet 20 is connected by conduit 22 which may be a flexible hose to the inlet of a storage device 24 such as a canister filled with granulated carbon material. The storage device 24 has its inlet 26 connected via a conduit 28 to the inlet of an electrically operated valve 30 which has its outlet connected through a conduit 32 to the engine air inlet at 34. The valve 30 may be controlled by an electronic control unit 36 which may be part of the engine control system (not shown).

An electrically operated fuel pump 38 is disposed in the tank and immersed in the liquid as indicated by the reference character L and the pump 38 has the discharge side thereof connected through conduit 40 through the wall of the fuel tank as indicated by the fitting 42 in the upper wall 18 and through external conduit 44 to the engine fuel injectors 46. The discharge side of the fuel pump is also connected to the inlet of a venturi 48 disposed in the tank 12, with the outlet thereof discharging to the interior of the tank. The throat region 50 of the venturi 48 is tapped and connected through conduit 52, which may be a flexible hose, to the outlet of a one-way drain valve 54 which will be described hereinafter in greater detail. In the presently preferred practice of the invention, the venturi throat is sized to create a dynamic depression (vacuum) of about 20 - 25 inches (50.8 - 63.5 cm) of H₂O column; however, it will be understood that for exceptionally large or small fuel tank systems more or less vacuum at the venturi respectively may be required.

The vent valve 16 has at least one and preferably a plurality of vapor vent lines 56 each connected at one end thereof to the valve 16, as will hereinafter be described, with the distal end of each of the tubes 56 extending to the extremities of the vapor dome in the tank above the fuel level denoted by reference character L. Each of the vent lines 56 has a float operated restrictor valve 58 provided thereon as will hereinafter be described in greater detail.

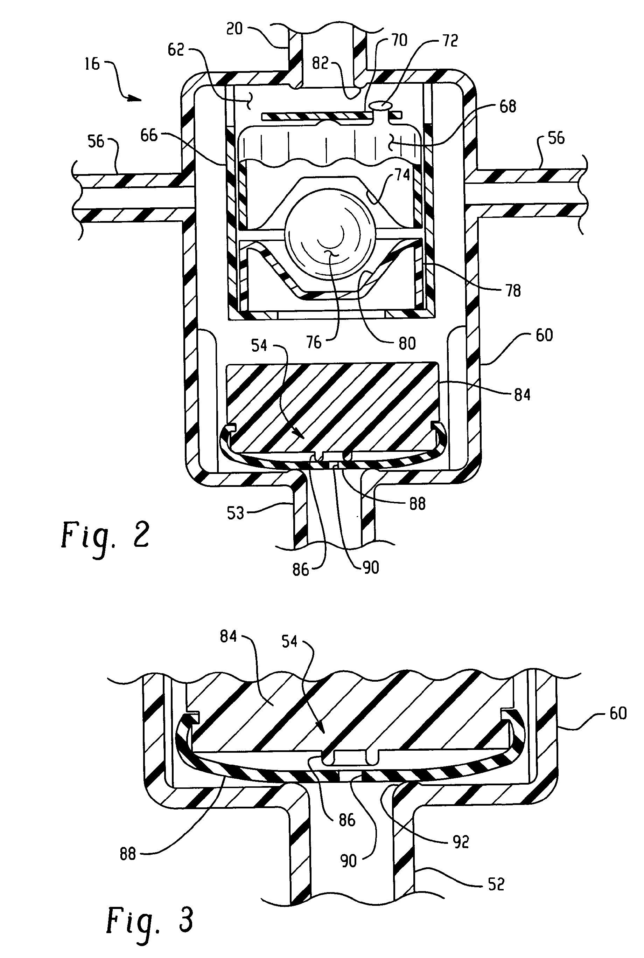

Referring to FIG. 2, the vapor vent valve 16 has a body 60 defining a valving chamber 62 therein and has liquid fuel entry ports 64 formed in the body to permit the liquid fuel in the tank to enter the valving chamber 62. The vapor vent tubes 56 have one end thereof connected to the valve body 60. The valving chamber 62 includes a cage 66 which retains therein a float 68 which has a valve member 70 in the form of a flexible strip attached to the upper surface of the float 68. In the presently preferred practice, the valving member 70 is formed of elastomeric material and is engaged over a projection 72 formed on the upper surface of the float 68 for attaching one end of the strip to the float 68. The end of member 70 opposite the one end is attached to the body 60 by any convenient technique; as, for example stretch or snap engagement over mounting projections.

The lower end of the float 68 has a camming surface 74 formed thereon with an inertial mass 76 disposed therewith and captured by the lower end of the float. A second or lower float 78 is disposed within the cage 66 which also has a similar camming surface 80 formed on the upper end thereof which cooperates with the cam surface 74 to cause the float 68 to move upwards upon tilting of the tank and the contact of the inertial mass 76 with the cam surfaces 74, 80. The upward movement of the float 68 either by the rising level of the liquid in the tank, or by contact of the inertial mass against the cam surfaces 74, 80 moves the valve member 70 into contact with valve seat 82 formed on the end of the conduit 20 entering the valving chamber 62. Alternatively valve member 70 could be spring biased.

A drain valve float 84 is disposed within the body 60 at the lower end thereof below cage 66; and, drain valve float 84 has an annular valve seat 86 formed on the lower surface thereof. A flexible valving member 88 is attached about the lower end of the float valve member 84; and, the flexible valve member 88 has a pilot hole 90 formed centrally therein. In the presently preferred practice of the invention, the valve member 88 is formed of elastomeric material.

The tube or hose 52 from the venturi throat 50 has its upper end connected to a suitable fitting 53 extending through the bottom of the valve housing 60 and has an annular valve seat 92 formed thereabout on the interior of the valve body 60. The elastomeric valve member 88, upon downward movement of drain valve float 84 contacts the valve seat 92 with its lower surface; and, the valve seat 86 on the drain valve float 84 contacts the upper surface of the elastomeric valve member 88 to seal about the pilot hole 90.

Referring to FIG. 3, the drain valve float 84 is shown slightly lifted from the position of FIG. 2 wherein the pilot hole 90 is closed by the valve seat 86 to a position where valve seat 86 is raised from the upper surface of elastomeric valve member 88 to open the pilot hole 90 and permit flow therethrough to the conduit 52. The limited flow through pilot hole 90 thus reduces the pressure forces acting on the valve member 88 caused by the reduced pressure in the conduit 52 from the venturi throat tap and permits the drain valve float member 84 to rise further with increasing fuel level in the valve body 60, thereby lifting the lower surface of valve member 88 from the valve seat 92 to permit full drain flow.

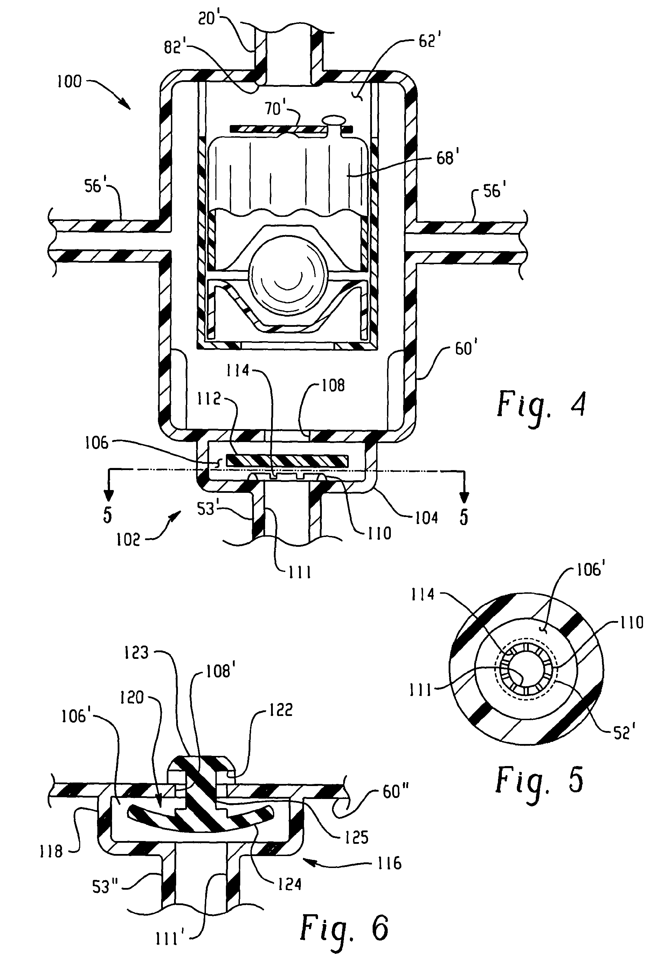

Referring to FIG. 4, an alternate embodiment of the vent valve is illustrated generally at 100 and is connected to vent outlet 20' and vent lines 56' in a manner similar to the valve 16 of FIG. 2. The valve assembly 100 includes a float 68' and flexible strip valve member 70' which seals about an annular valve seat 82' formed in the interior of the valving chamber 62' formed inside the valve body 60' and functions in a manner identical to that of the float operated valve in the embodiment of FIG. 2.

The valve 100 includes a drain valve assembly indicated generally at 102 which includes an auxiliary valve housing 104 formed on the bottom of the vent valve housing 60' and which has attached thereto by any suitable technique the upper end of a conduit 52' which has its other end connected to the venturi throat 50.

Valve housing 104 forms a valving chamber 106 which communicates with a drain hole 108 formed in the bottom of the body 60'; and, an annular valve seat 110 is formed about the opening in the chamber 104 to the interior of the tube 53' connecting to the venturi tap. A moveable valve member 112 preferably having a generally flat disk configuration is disposed in the chamber 106 for movement with respect to the valve seat 110 and the undersurface of the valve body 60' in the region around the drain hole 108.

Referring to FIG. 5, the valve seat 110 has a plurality of grooves 114 formed therein to form a castellated surface to prevent the valve member 112 from completely closing the interior 111 of the tube 53'.

In the event of positive pressurization in the tube 53', the force of the fluid raises valve member 112 to close drain hole 108 to prevent the pump from filling the interior of the body 60'.

Referring to FIG. 6, an alternate embodiment of the drain valve is indicated generally at 116 and has an auxiliary valve housing 118 formed on the bottom of the main valve housing 60" and forms a valve chamber 106' which communicates with the interior 111' of tube 52" which connects to the venturi throat 50. A drain hole 108' is formed in the bottom of the valve housing 60". A button or rivet type poppet valve member is moveably received in the drain hole 108'. In the presently preferred practice the valve member comprises a mushroom-shaped member indicated generally at 120 which has a plurality of radial grooves 122 formed in the upper head or flanged portion 123 thereof disposed on the interior of the housing 60". The lower head portion of valve member 120 disposed in the chamber 106' comprises an enlarged flanged portion 124 which extends outwardly over the drain hole 108'. Upper head 123 and lower head 124 or connected by a stem 125 passing through drain hole 108. It will be understood that stem 125 has a diameter or transverse dimension significantly less than the diameter of drain hole 108" to permit liquid fuel passing through grooves 122 to drain around stem 125 and through drain hole 125.

As shown in FIG. 6, the grooves or slots 122 permit liquid in the interior of the body 60" to drain through drain hole 108'. In the event that the venturi discharge becomes blocked or engine is shut down and positive pressure from the pump or hydrostatic head is experienced in the throat and chamber 108', the flanged portion 124 is raised in a vertical direction from the position shown in FIG. 6 and is forced against the undersurface of the body 60" and seals about the drain hole preventing liquid from entering the body 60". If desired valve 120 may be biased upwardly by the elastomer or a separate spring

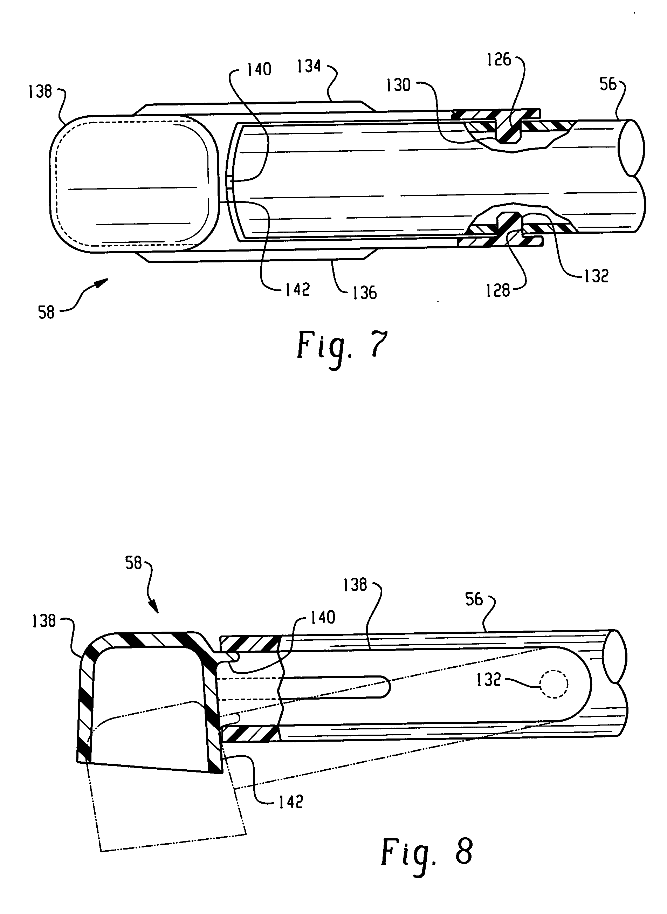

Referring to FIGS. 7 and 8, the restrictor valve 58 is shown in enlarged detail wherein the region proximate end of the tube 56 has diametrally opposed apertures 126, 128 formed therein, each of which has received pivotally therein a trunnion 130, 132 respectively, the trunnions extending inwardly respectively from a pair of parallel arms 134, 136 respectively extending along the sides of tube 56 and beyond the end thereof with the ends of the arms 134, 136 attached to the float 138 on opposite sides thereof. Float 138 has a lug or projection 140 extending horizontally outwardly therefrom and into the end of the tube 56. The edge of the float 142 adjacent the end of the tube 56 is closely spaced therefrom such that when the float is in the fully upward position, as shown in solid outline in FIGS. 7 and 8, the edge of the float severely restricts the flow of liquid from the tank into the tube as is shown clearly in FIG. 8. Upward movement of the float is limited by contact of the pin 140 with the undersurface of the upper portion of the wall of the tube 56.

Referring to FIG. 8, the float 138 is shown in dashed outline in its lowered position caused by a decrease in the liquid level L in the tank; and, downward movement of the float 138 is limited by contact of the pin 140 with the lower portion of the inner surface of the wall of the tube 56. In the position shown in dashed outline, the edge 142 of the float is moved to a position so as to further open the end of tube 56 and permit greater fluid entry therein. In the present practice of the invention, the float 138 and arms 134, 136 and trunnions 130, 132 are formed integrally as a one-piece unit such as for example by molding from engineered resinous material.

The present invention thus provides for utilizing a reduced dynamic pressure or suction created by connecting the output of a submersed fuel pump through a venturi and tapping the venturi throat to a one way drain valve provided in the bottom of a float operated fuel vapor vent valve, provided in the fuel tank. The one way valve prevents any fluid under positive pressure from the venturi from entering the vapor vent valve.

Although the invention has hereinabove been described with respect to the illustrated embodiments, it will be understood that the invention is capable of modification and variation and is limited only by the following claims.

## Claims

1. A method of controlling fuel vapor venting from a fuel tank, comprising:
(a) disposing a vent valve with a valve chamber in the tank and porting in the valving chamber to the vapor dome above the liquid in the tank and connecting a venting outlet of the valving chamber to a storage device remote from the tank;
(b) disposing a float operated valve member in the valving chamber and closing the venting outlet when the float is raised to a certain level by liquid fuel in the tank;
(c) disposing a one way liquid drain valve in the valving chamber;
(d) disposing a fuel pump in the tank and discharging fuel from the pump to the inlet of a venturi and permitting the venturi outlet to discharge in the tank; and,
(e) connecting a throat port in the venturi to the liquid drain valve and effecting aspiration of liquid from the drain valve to the throat during pump operation.

2. The method defined in claim 1, wherein the step of porting the valving chamber to the vapor dome includes connecting vent tubes from the valving chamber to the remote region of the vapor dome and ensuring the remote end of at least one vent tube is exposed to fuel vapor when the vehicle is on a grade.

3. The method defined in claim 2, wherein the step of connection vent tubes includes providing a float operated valve in the remote end of each vent tube.

4. The method defined in claim 1, wherein the step of disposing a liquid drain valve in the valving chamber includes disposing flexible pressure responsive poppet.

5. The method defined in claim 4, wherein the step of disposing a liquid drain valve in the valving chamber includes disposing a member with a moveable elastomeric poppet.

6. The method defined in claim 4, wherein the step of disposing a one-way liquid drain valve includes disposing a pilot operated float valve.

7. A system for controlling fuel vapor venting from a fuel tank comprising:
(a) a vent valve disposed in vapor dome of the tank having a valving chamber with a moveable valve member therein and an outlet extending externally of the tank for connection to a vapor storage device;
(b) at least one vapor vent line with one end connected to the valving chamber and the end distal the one end extending to the extremities of the vapor dome;
(c) a fuel pump disposed in the tank with the output thereof connected to discharge externally of the tank and to discharge to a venturi within the tank; with the venturi throat connected to the outlet of a one-way valve with its inlet connected to the valving chamber.

8. The system defined in claim 7, wherein said at least one vapor vent line includes a plurality of vapor vent lines extending to different extremities of the vapor dome.

9. The system defined in claim 7, wherein said venturi throat is connected to the outlet of the drain valve by a flexible line.

10. The system defined in claim 7, wherein said at least one vapor vent line includes a float operated flow restrictor on the distal end.

11. The system defined in claim 7, wherein said one way valve includes an elastomeric poppet.

12. The system defined in claim 7, wherein said vent valve is disposed on the undersurface of an upper wall of the tank.

13. The system defined in claim 7, wherein the one way valve includes a disc-shaped moveable obturator.

14. The system defined in claim 7, wherein said moveable valving member includes an inertial mass operable to move said valve member effect closing of the outlet in the event the tank is tilted beyond a threshold amount.

15. The system defined in claim 7, wherein said one way drain valve is float operated and includes a pilot valve.
